# EUROPÄISCHE PATENTSCHRIFT

(11) **EP 2 162 337 B1**
(45) Veröffentlichungstag und Bekanntmachung des Hinweises auf die Patenterteilung: **31.10.2012**
(21) Anmeldenummer: 08773540.3
(22) Anmeldetag: 20.06.2008
(51) Int. Cl.: B60W 50/08, B60K 31/00

(54) **GESCHWINDIGKEITSREGLER FÜR KRAFTFAHRZEUGE**
CRUISE CONTROL FOR MOTOR VEHICLES
RÉGULATEUR DE VITESSE POUR VÉHICULES AUTOMOBILES

(30) Priorität: 06.07.2007 DE 102007031541
(43) Veröffentlichungstag der Anmeldung: 17.03.2010
(73) Patentinhaber: Bayerische Motoren Werke Aktiengesellschaft, 80809 München (DE)
(72) Erfinder: HUANG, Pei-Shih Dennis, 85293 Reichertshausen (DE)
(86) Internationale Anmeldenummer: PCT/EP2008/004973
(87) Internationale Veröffentlichungsnummer: WO 2009/006991

(56) Entgegenhaltungen:
- EP-A- 1 031 453
- DE-A1- 10 145 915
- FR-A- 2 849 411
- FR-A- 2 879 527
- US-A- 4 541 052
- US-A- 6 078 860

## Beschreibung

Die Erfindung bezieht sich auf einen Geschwindigkeitsregler für Kraftfahrzeuge zur Regelung der Geschwindigkeit auf eine vorgegebene Sollgeschwindigkeit.

Geschwindigkeitsregler ermöglichen ein Fahren mit einer vom Fahrer einstellbaren Sollgeschwindigkeit ohne dass der Fahrer die Geschwindigkeit dauern über das Gaspedal vorgeben muss. Diese Regler sind vor allem bei Fahrten auf Autobahnen mit geringer Verkehrsdichte geeignet, da hier ein Fahren mit konstanter Geschwindigkeit oft gewünscht ist.

Kraftfahrzeuge mit Geschwindigkeitsreglern sind seit langem bekannt. Die meisten derzeit erhältlichen Geschwindigkeitsregler regeln die Geschwindigkeit des Kraftfahrzeugs auf eine vorgegebene Sollgeschwindigkeit. Neben diesen Geschwindigkeitsreglern können heute bereits bei einigen Herstellem auch um eine Abstandsregelung erweiterte Geschwindigkeitsregler erworben werden. Vom Prinzip her ist dabei die allgemein bekannte Geschwindigkeitsregelung, die eine bestimmte vorgegebene Sollgeschwindigkeit einhält, um eine zusätzliche Abstandsfunktion erweitert, so dass der Einsatz einer solchen "abstandsbezogenen" Geschwindigkeitsreglung auch im dichten Autobahn- und Landstrassenverkehr möglich wird. Diese sog. "abstandsbezogene Geschwindigkeitsregelung" hält die vorgegebene Wunschgeschwindigkeit, wenn die eigene Fahrspur frei ist. Erkennt eine am Kraftfahrzeug angebrachte Abstandsensorik, die insbesondere auf Radarbasis arbeiten kann, ein vorausfahrenden Zielobjekt bzw. (Kraft-)Fahrzeug in der eigenen Spur, so wird die eigene Geschwindigkeit, bspw. durch Veranlassen eines geeigneten Bremsmoments, an die Geschwindigkeit des vorausfahrenden Kraftfahrzeugs angepasst. Teilweise können solche Systeme bei einer Folgefahrt bis in den Stillstand regeln.

Prinzipiell können Geschwindigkeitsregelsysteme mittels einer am Lenkrad oder Armaturenbrett angebrachten ersten Bedieneinheit oder eines an einem in der Nähe des Lenkrads angeordneten Hebels ein- und ausgeschaltet werden. Die Sollgeschwindigkeit wird dabei in der Regel ebenfalls über eine entsprechende zweite Bedieneinheit vorgegeben, wobei durch die Betätigung entweder die aktuelle Geschwindigkeit als Sollgeschwindigkeit durch Betätigung einer sog. Set-Taste oder eine bereits gespeicherte (alte) Sollgeschwindigkeit als neue Sollgeschwindigkeit durch Betätigung einer sog. Resume-Taste vorgegeben wird. Dabei ist für jede Funktion bzw. Einstellung ein separates Bedienelement innerhalb der Bedieneinheiten vorgesehen.

Weiter kann die Geschwindigkeitsregelung derart ausgestalteter Geschwindigkeitsregler aufgrund bestimmter Fahr- oder Fahrermanöver unterbrochen werden, so dass der Geschwindigkeitsregler prinzipiell noch eingeschaltet ist, aber die Geschwindigkeitsregelung derzeit nicht ausgeführt wird. Eine Unterbrechung der Geschwindigkeitsregelung erfolgt bspw. wenn der Fahrer das Bremspedal oder die Handbremse betätigt, oder aufgrund eines automatischen Fahr-Stabilisierungseingriffs. Derart ausgestaltete Geschwindigkeitsregler sind für Personen, die nicht regelmäßig den Geschwindigkeitsregler nutzen, oft nur schwer zu bedienen, da die Funktionsauswahl aufgrund der vielen Bedienelemente unübersichtlich erscheint.

Alternativ zu den derzeit erhältlichen Geschwindigkeitsreglern offenbart die DE 2829894 A1 ebenfalls eine Vorrichtung zur automatischen Regelung der Geschwindigkeit des Kraftfahrzeugs auf eine vorgegebene Sollgeschwindigkeit, wobei die Sollgeschwindigkeit nicht durch ein separates Bedienelement, sondern durch Betätigung des Gaspedals oder des Bremspedals vorgegeben wird. Hier kann der Fahrzeuglenker bei Erreichen der von ihm gewünschten Fahrgeschwindigkeit durch Fortnehmen seines Fußes vom gerade betätigten Pedal (Gaspedal oder Bremspedal) mit der aktuellen Geschwindigkeit weiterfahren. Eine Unterbrechung der Geschwindigkeitsregelung scheint nicht möglich zu sein.

Schließlich ist aus der FR 2 849 411 A ein Verfahren sowie eine Vorrichtung zur Geschwindigkeits- und Abstandsregelung bekannt, wobei die Vorrichtung ein Bedienelement zum Einschalten und Ausschalten der Regelung, ein Gaspedal zum Aktivieren der Regelung und zur Vorgabe der Sollgeschwindigkeit umfasst. Die Sollgeschwindigkeit wird dabei derart eingestellt, dass beim Lösen des Gaspedals die aktuelle Fahrgeschwindigkeit als Sollgeschwindigkeit vorgegeben wird wenn zuvor für einen vorgegebenen Zeitraum die Geschwindigkeit oder die Gaspedalstellung innerhalb eines Toleranzbereichs konstant war.

Der nächstliegende Stand der Technik ist in der FR 2 849 411 A zu sehen.

Aufgabe der Erfindung ist es, einen für den Fahrer einfach und intuitiv bedienbaren Geschwindigkeitsregler anzugeben.

Diese Aufgabe wird durch einen Geschwindigkeitsregler nach Anspruch 1 gelöst. Vorteilhafte Weiterbildungen ergeben sich aus den abhängigen Ansprüchen.

Der erfindungsgemäße Geschwindigkeitsregler umfasst in einfachster Ausgestaltung lediglich die nachfolgenden drei Bedienelemente, durch deren Betätigung alle Einstellungen zur Geschwindigkeitsregelung vorgenommen werden können: eine Bedieneinheit zu Einschalten und Ausschalten der Geschwindigkeitsregelung, ein ohnehin vorhandenes Gaspedal zum Aktivieren der Geschwindigkeitsregelung und zur Sollgeschwindigkeitsvorgabe, und ein ohnehin vorhandenes Bremspedal zum Unterbrechen der aktiven Geschwindigkeitsregelung.

Dieser Geschwindigkeitsregler umfasst somit die Vorteile der bekannten Geschwindigkeitsregler ohne deren Nachteile, nämlich eine komplizierte Bedienung aufzuweisen. Durch diese Erfindung kann der Fahrer durch äußert einfache und intuitive Bedienung die wesentlichen Einstellungen zur Geschwindigkeitsregelung vornehmen.

Die Bedieneinheit zu Einschalten und Ausschalten der Geschwindigkeitsregelung führt in einfachster Ausgestaltung lediglich zwei Funktionen aus. Ist das Geschwindigkeitsregelsystem ausgeschaltet, wird es durch Betätigung eines (ersten) Bedienelements eingeschaltet. Ist das Geschwindigkeitsregelsystem eingeschaltet, wird es durch Betätigung eines (zweiten) Bedienelements ausgeschaltet. Vorteilhafterweise sind das (erste) Bedienelement zum Einschalten und das (zweite) Bedienelement zum Ausschalten der Geschwindigkeitsregelung als ein Bedienelement ausgestaltet, wobei ein Ein- oder Ausschalten in Abhängigkeit vom aktuellen Zustand der Geschwindigkeitsregelung erfolgt. Weitere mögliche Funktionen des einen Bedienelements werden später erläutert.

Das Gaspedal dient einerseits zum Aktivieren einer unterbrochenen, d. h. einer zwar eingeschalteten, aber aktuell nicht aktiven Geschwindigkeitsregelung, und andererseits zum Einstellen bzw. zum Vorgegeben der Sollgeschwindigkeit. Ist die Geschwindigkeitsregelung gerade unterbrochen, kann eine Aktivierung durch eine Betätigung des Gaspedals herbeigeführt werden. Da zum Zeitpunkt der Gaspedalbetätigung der Fahrer noch selbst die Geschwindigkeit des Kraftfahrzeugs auf herkömmliche Weise bestimmt, wird die Geschwindigkeitsregelung erst dann aktiviert, also wieder aufgenommen werden, sobald der Fahrer das betätigte Gaspedal wieder löst. Alternativ kann die Geschwindigkeitsregelung auch sofort bei Betätigung des Gaspedals aktiviert werden, wobei die Regelung dann während der Betätigung quasi wirkungslos ist, da die aktuelle Geschwindigkeit gleichzeitig die Sollgeschwindigkeit ist. Somit ist kein zusätzliches Bedienelement zum Aktivieren der unterbrochenen Geschwindigkeitsregelung notwendig.

Neben dem Aktivieren einer unterbrochenen Geschwindigkeitsregelung übernimmt das Gaspedal auch die Funktion der Sollgeschwindigkeitsvorgabe. Diese erfolgt ebenfalls durch eine entsprechende Betätigung des Gaspedals. Vorteilhafterweise wird bei Betätigung und anschließendem Lösen des Gaspedals als Sollgeschwindigkeit die beim Lösen des Gaspedals aktuelle Geschwindigkeit oder erfindungsgemäß eine in Abhängigkeit von der beim Lösen des Gaspedals aktuellen Geschwindigkeit ermittelte Geschwindigkeit vorgegeben. Bei der von der aktuellen Geschwindigkeit abhängigen Sollgeschwindigkeit wird bei der Ermittlung zumindest ein weiterer Fahrzeugparameter, der ein Maß für den aktuellen Fahrzustand des Fahrzeugs beinhaltet, berücksichtigt. Demnach wird nicht nur die aktuelle Geschwindigkeit des Fahrzeugs, sondern auch der aktuelle Fahrzustand berücksichtigt. Dadurch kann der subjektive Eindruck des Fahrers bei der Geschwindigkeitsregelung auf die Sollgeschwindigkeit verbessert werden.

Vorteilhafterweise kann als Sollgeschwindigkeit eine sich nach einem vorgegebenen ersten fahrzustandabhängigen Zeitintervall nach dem Lösen des Gaspedals einstellende aktuelle, oder eine innerhalb dieses Zeitintervalls maximale Geschwindigkeit vorgegeben werden. Dadurch kann sichergestellt werden, dass bspw. die bereits ausgegebene Energie der Antriebseinheit noch weiter genutzt werden kann. Das erste fahrzustandabhängige Zeitintervall kann bspw. in Abhängigkeit vom aktuellen Motorschleppmoment vorgegeben werden.

Alternativ oder zusätzlich kann bei der Sollgeschwindigkeitsvorgabe auch die beim Lösen des Gaspedals aktuelle Beschleunigung, insbesondere die Längsbeschleunigung des Kraftfahrzeugs berücksichtigt werden. Die aktuelle Beschleunigung kann dabei derart berücksichtigt werden, dass die Sollgeschwindigkeit aus der aktuellen Geschwindigkeit und der Beschleunigung mit einer definierten Vorausschauzeit vorgegeben wird, d. h. als Sollgeschwindigkeit wird nach dem Lösen des Gaspedals die Summe aus aktueller Geschwindigkeit und dem Produkt aus aktueller Beschleunigung mit einem vorgegeben zweiten Zeitintervall vorgegeben.

Im Gegensatz zur Betätigung des Gaspedals wird mit Betätigung des Bremspedals keine Solleschwindigkeit vorgegeben. Vielmehr wird bei Betätigung des Bremspedals oder bei einem erkannten Bremswunsch die aktive Geschwindigkeitsregelung unterbrochen, so dass das Fahrzeug beim Lösen des Bremspedals die aktuelle Geschwindigkeit nicht hält, sondern aufgrund des aktuellen Motorschleppmoments verzögert wird. Ein Bremswunsch kann bspw. in Abhängigkeit von den Signalen einer Fußraumüberwachungssensorik erkannt werden. Wesentlich ist hierbei, dass mittels der geeigneten Fußraumüberwachungssensorik eine Bremsbereitschaft bzw. ein Bremswunsch des Fahrers bereits vor der tatsächlichen Bremspedalbetätigung erkannt werden kann, und somit die Geschwindigkeitsregelung wesentlich schneller bzw. bereits vor einer tatsächlichen Bremspedalbetätigung unterbrochen werden kann.

Die ausgesendeten Signale der Fußraumüberwachungssensorik können von einer Überwachungseinheit erfasst und im Hinblick auf das Erkennen einer Bremsbereitschaft ausgewertet werden. Dabei kann die Überwachungseinheit vorteilhafterweise aus den Signalen der Fußraumüberwachungssensorik die Wahrscheinlichkeit einer Bremsbereitschaft ermitteln. In Abhängigkeit von der ermittelten Wahrscheinlichkeit kann die Überwachungseinheit eine Unterbrechung der Geschwindigkeitsregelung vornehmen. Übersteigt die ermittelte Wahrscheinlichkeit einen vorgegebenen Wahrscheinlichkeitsschwellwert, kann eine Unterbrechung der Geschwindigkeitsregelung eingeleitet werden.

Anstelle einer Wahrscheinlichkeitsermittlung kann die Überwachungseinheit bei Vorliegen bestimmter Signale bzw. einer bestimmten Signalkombination ohne Wahrscheinlichkeitsermittlung auch gleich eine Unterbrechung der Geschwindigkeitsregelung vornehmen.

Da bei einem derart ausgestalteten Geschwindigkeitsregler die Geschwindigkeitsregelung jedes Mal aktiviert werden würde, wenn der Fahrer das Gaspedal betätigt oder das betätigte Gaspedal löst, muss zumindest ein weiteres Bedienelement vorgesehen sein, durch dessen Betätigung der Fahrer entscheiden kann, ob er den Geschwindigkeitsregler einschalten, oder aktuell ohne Unterstützung fahren möchte. Wie bereits oben erwähnt, umfasst der Geschwindigkeitsregler deshalb eine Bedieneinheit - vorteilhafterweise mit einem einzigen Bedienelement - welches in einfachster Ausgestaltung lediglich ein Einschalten und Ausschalten des Geschwindigkeitsreglers ermöglicht.

Vorteilhafterweise ist das eine Bedienelementelement zum Einschalten und Ausschalten der Geschwindigkeitsregelung demnach derart ausgestaltet, dass bei Betätigung des Bedienelements bei ausgeschalteter Geschwindigkeitsregelung die Geschwindigkeitsregelung eingeschaltet wird und bei Betätigung des Bedienelements bei eingeschalteter und aktiver oder eingeschalteter und unterbrochener Geschwindigkeitsregelung ausgeschaltet wird. Dem Fahrer steht somit nur ein einziges Bedienelement zur Verfügung, über dessen Betätigung er die Regelung entweder ein- oder ausschalten kann. Wird der Geschwindigkeitsregler durch Betätigung des einzigen Bedienelements eingeschaltet, kann die Geschwindigkeitsregelung entweder gleich in einen Aktivmodus wechseln, wobei als Sollgeschwindigkeit die aktuelle Geschwindigkeit vorgegeben wird, oder in einen unterbrochenen Regelmodus, bei dem aktuell keine Geschwindigkeitsregelung vorgenommen wird. Die Geschwindigkeitsregelung wird erst bei Betätigung des Gaspedals und ggf. anschließendem Lösen des Gaspedals aktiviert.

Um den Fahrer mitzuteilen, ob das Geschwindigkeitsregelsystem gerade eingeschaltet ist, sollte entweder in der Nähe des Bedienelements oder in der Instrumententafel eine optische Anzeige aktiviert werden. Analog kann die optische Anzeige auch nur dann aktiviert werden, wenn der Geschwindigkeitsregler ausgeschaltet ist.

In einer alternativen Ausführungsform, kann die ein Bedieneinelement zum Einschalten und Ausschalten der Geschwindigkeitsregelung umfassende Bedieneinheit auch derart ausgestaltet sein, dass durch Betätigung des Bedienelements im ausgeschalteten Zustand der Geschwindigkeitsregler eingeschaltet wird, wobei die Regelung gleich aktiv werden kann oder unterbrochen bleibt. Bei einer Betätigung des Bedienelements bei eingeschalteter und aktiver Geschwindigkeitsregelung wird die die Geschwindigkeitsregelung lediglich unterbrochen. Wird das Bedienelement bei eingeschalteter und unterbrochener Geschwindigkeitsregelung betätigt, wird, die unterbrochene Geschwindigkeitsregelung ausgeschaltet.

Um bei eingeschalteter und aktiver Geschwindigkeitsregelung durch einmalige Betätigung des Bedienelements den Geschwindigkeitsregler gleich ausschalten zu können, kann in einer vorteilhaften Ausgestaltung der Erfindung bzw. des einen Bedienelements dieses auch derart ausgestaltet sein, dass bei eingeschalteter Geschwindigkeitsregelung und ggf. bei aktiver Geschwindigkeitsregelung der Regler gleich ausgeschaltet werden kann, wenn das Bedienelement für eine vorgegebene Zeitdauer betätigt wird. Alternativ kann das Bedienelement auch mit einer vorgegebenen Kraft betätigt werden, die dazu führt, dass das Bedienelement in eine zweite Stellung gebracht wird, die nur mit erhöhtem Kraftaufwand erreicht werden kann. Ist diese zweite Stellung erreicht, wird der Geschwindigkeitsregler unabhängig vom aktuellen Zustand ausgeschaltet.

Diese Ausgestaltung des Geschwindigkeitsreglers ermöglicht eine äußert einfache und intuitive Bedienung des Geschwindigkeitsreglers.

## Patentansprüche

1. Geschwindigkeitsregler für Kraftfahrzeuge zur Regelung der Geschwindigkeit auf eine vorgegebene Sollgeschwindigkeit, mit einer Bedieneinheit zu Einschalten und Ausschalten der Geschwindigkeitsregelung, mit einem Gaspedal zum Aktivieren der Geschwindigkeitsregelung und zur Vorgabe der Sollgeschwindigkeit, und mit einem Bremspedal zum Unterbrechen der aktiven Geschwindigkeitsregelung, wobei bei Betätigung des Gaspedals die Geschwindigkeitsregelung aktiviert wird, sobald das betätigte Gaspedal gelöst wird, **dadurch gekennzeichnet, dass** bei Betätigung des Gaspedals als Sollgeschwindigkeit eine in Abhängigkeit von der beim Lösen des Gaspedals aktuellen Geschwindigkeit ermittelte Geschwindigkeit vorgegeben wird, wobei bei der Ermittlung zumindest ein weiterer Fahrzeugparameter, der ein Maß für den aktuellen Fahrzeugstand des Fahrzeugs beinhaltet, berücksichtigt wird.

2. Geschwindigkeitsregler nach Anspruch 1, **dadurch gekennzeichnet, dass** als Sollgeschwindigkeit eine sich nach einem vorgegebenen ersten fahrzustandsabhängigen Zeitintervall nach dem Lösen des Gaspedals einstellende aktuelle, oder eine innerhalb dieses Zeitintervalls maximale Geschwindigkeit vorgegeben wird.

3. Geschwindigkeitsregler nach Anspruch 2, **dadurch gekennzeichnet, dass** das fahrzustandsabhängige Zeitintervall in Abhängigkeit vom aktuellen Motorschleppmoment vorgegeben wird.

4. Geschwindigkeitsregler nach Anspruch 1, **dadurch gekennzeichnet, dass** die Sollgeschwindigkeit aus der aktuellen Geschwindigkeit und der Beschleunigung des Kraftfahrzeugs mit einer definierten Vorausschauzeit vorgegeben wird.

5. Geschwindigkeitsregler nach einem der vorangegangenen Ansprüche, **dadurch gekennzeichnet, dass** bei Betätigung des Bremspedals oder bei erkanntem Bremswunsch die aktive Geschwindigkeitsregelung unterbrochen wird.

6. Geschwindigkeitsregler nach Anspruch 5, **dadurch gekennzeichnet, dass** der Bremswunsch in Abhängigkeit von den Signalen einer Fußraumüberwachungssensorik erkannt wird.

7. Geschwindigkeitsregler nach einem der vorangegangenen Ansprüche, **dadurch gekennzeichnet, dass** die Bedieneinheit ein Bedienelementelement zum Einschalten und Ausschalten der Geschwindigkeitsregelung umfasst, und das Bedienelement derart ausgestaltet ist, dass bei Betätigung des Bedienelements bei ausgeschalteter Geschwindigkeitsregelung die Geschwindigkeitsregelung eingeschaltet wird.

8. Geschwindigkeitsregler nach einem der vorangegangenen Ansprüche, **dadurch gekennzeichnet, dass** die Bedieneinheit ein Bedienelementelement zum Einschalten und Ausschalten der Geschwindigkeitsregelung umfasst, und das Bedienelement derart ausgestaltet ist, dass bei Betätigung des Bedienelements bei eingeschalteter aktiver Geschwindigkeitsregelung die Geschwindigkeitsregelung unterbrochen oder ausgeschaltet wird.

9. Geschwindigkeitsregler nach einem der vorangegangenen Ansprüche, **dadurch gekennzeichnet, dass** die Bedieneinheit ein Bedienelement zum Einschalten und Ausschalten der Geschwindigkeitsregelung umfasst und das Bedienelement derart ausgestaltet ist, dass bei Betätigung des Bedienelements bei eingeschalteter unterbrochener Geschwindigkeitsregelung die Geschwindigkeitsregelung ausgeschaltet wird.

10. Geschwindigkeitsregler nach Anspruch 8 oder 9, **dadurch gekennzeichnet, dass** die eingeschaltete Geschwindigkeitsregelung bei Betätigung des Bedienelements nur dann ausgeschaltet wird, wenn das Bedienelement für eine vorgegebene Zeit betätigt wird, oder wenn das Bedienelement mit einer vorgegebenen Kraft betätigt wird.

## Claims

1. A cruise control system for motor vehicles for controlling the speed to a preset desired speed, with an operating unit for switching the cruise control on and off, with an accelerator pedal to activate the cruise control and to preset the desired speed, and with a brake pedal to interrupt the active cruise control, wherein on actuation of the accelerator pedal, the cruise control is activated as soon as the actuated accelerator pedal is released, **characterised in that** on actuation of the accelerator pedal, a speed determined depending on the current speed on release of the accelerator pedal is preset as the desired speed, at least one further vehicle parameter containing a measure of the current vehicle state of the vehicle being taken into account during the determination.

2. A cruise control system according to claim 1, **characterised in that** a current speed being adjusted after a preset first vehicle state-dependent time interval after the release of the accelerator pedal, or a maximum speed within this time interval, is preset as the desired speed.

3. A cruise control system according to claim 2, **characterised in that** the vehicle state-dependent time interval is preset depending on the current engine drag torque.

4. A cruise control system according to claim 1, **characterised in that** the desired speed is preset from the current speed and the acceleration of the motor vehicle with a defined forecast time.

5. A cruise control system according to any one of the preceding claims, **characterised in that** on actuation of the brake pedal or when a braking intention is recognised, the active cruise control is interrupted.

6. A cruise control system according to claim 5, **characterised in that** the braking intention is detected depending on the signals of a footwell monitoring sensor system.

7. A cruise control system according to any one of the preceding claims, **characterised in that** the operating unit comprises an operating element to switch the cruise control on and off, and the operating element is configured in such a way that on actuation of the operating element when the speed control is switched off, the speed control is switched on.

8. A cruise control system according to any one of the preceding claims, **characterised in that** the operating unit comprises an operating element for switching the cruise control on and off, and the operating element is configured in such a way that on actuation of the operating element when the active cruise control is switched on, the cruise control is interrupted or switched off.

9. A cruise control system according to any one of the preceding claims, **characterised in that** the operating unit comprises an operating element to switch the cruise control on and off and the operating element is configured in such a way that on actuation of the operating element with the cruise control switched on and interrupted, the cruise control is switched off.

10. A cruise control system according to claim 8 or 9, **characterised in that** the switched-on cruise control, on actuation of the operating element, is only switched off when the operating element is actuated for a preset time, or when the operating element is actuated with a preset force.

## Revendications

1. Régulateur de vitesse de véhicule automobile pour réguler la vitesse sur une vitesse de consigne prédéfinie comportant une unité de manoeuvre pour brancher et couper la régulation de vitesse, une pédale d'accélérateur pour activer la régulation de vitesse et pour prédéfinir une vitesse de consigne ainsi qu'une pédale de frein pour neutraliser la régulation de vitesse active,
- l'actionnement de la pédale d'accélérateur active la régulation de vitesse dès que la pédale d'accélérateur ainsi actionnée est relâchée,
régulateur **caractérisé en ce que**
- l'actionnement de la pédale d'accélérateur, prédéfinit la vitesse de consigne en fonction de la vitesse actuelle déterminée lorsque la pédale d'accélérateur est libérée et cette détermination tient compte d'au moins un autre paramètre du véhicule qui est une mesure de l'état actuel du véhicule.

2. Régulateur de vitesse selon la revendication 1,
**caractérisé en ce que**
la vitesse de consigne est la vitesse actuelle qui se règle à un premier intervalle de temps dépendant de l'état de roulage après le relâchement de la pédale d'accélérateur ou la vitesse maximale dans cet intervalle de temps.

3. Régulateur de vitesse selon la revendication 2,
**caractérisé en ce qu'**
on prédéfinit l'intervalle de temps dépendant de l'état de roulage en fonction du couple actuel de frein moteur.

4. Régulateur de vitesse selon la revendication 1,
**caractérisé en ce qu'**
on prédéfinit la vitesse de consigne à partir de la vitesse actuelle et de l'accélération du véhicule avec un temps prévisionnel prédéfini.

5. Régulateur de vitesse selon l'une des revendications précédentes,
**caractérisé en ce que**
l'actionnement de la pédale de frein ou la détection d'une demande de freinage interrompent la régulation active de vitesse.

6. Régulateur de vitesse selon la revendication 5,
**caractérisé en ce que**
la demande de freinage est reconnue en fonction des signaux fournis par des capteurs de surveillance de l'espace au niveau des pieds.

7. Régulateur de vitesse selon l'une des revendications précédentes,
**caractérisé en ce que**
l'unité de service comporte un élément de service pour brancher et couper la régulation de vitesse et l'élément de service est réalisé pour que l'actionnement de l'élément de service active la régulation de vitesse, si la régulation de vitesse est coupée.

8. Régulateur de vitesse selon l'une des revendications précédentes,
**caractérisé en ce que**
l'unité de service comporte un élément de service pour brancher et pour couper la régulation de vitesse et l'élément de service est réalisé pour que l'actionnement de l'élément de service coupe ou interrompt la régulation de vitesse si la régulation de vitesse est activée.

9. Régulateur de vitesse selon l'une des revendications précédentes,
**caractérisé en ce que**
l'unité de service comporte un élément pour brancher et pour couper la régulation de vitesse et l'élément de service est conçu pour que si la régulation de vitesse est activée mais interrompue, l'actionnement de l'élément de service coupe la régulation de vitesse.

10. Régulateur de vitesse selon l'une des revendications 8 ou 9,
**caractérisé en ce qu'**
à l'actionnement de l'élément de service, la régulation de vitesse branchée n'est coupée que si l'élément de service est actionné pendant une durée prédéterminée ou si l'élément de service est actionné avec une force prédéfinie.
